# EUROPEAN PATENT APPLICATION

(11) **EP 4 576 007 A1**
(43) Date of publication of application: **25.06.2025**
(21) Application number: 24219370.4
(22) Date of filing: 12.12.2024
(51) Int. Cl.: G06V 10/26, G06V 10/75, G06V 20/59, B60P 7/00, B64D 47/08

(54) **SYSTEMS AND METHODS FOR MONITORING CARGO**

(30) Priority: 22.12.2023 US 202318394853
(71) Applicant: The Boeing Company, Arlington, VA 22202 (US)
(72) Inventor: ANSTEY, Timothy W., Arlington, VA, 22202 (US); AYYAGARI, Arun, Arlington, VA, 22202 (US); GALVAN, Aron Adoney, Arlington, VA, 22202 (US); GARABEDIAN, Thomas Edwin, Arlington, VA, 22202 (US); HETTICK, Lawrence Dean, Arlington, VA, 22202 (US); ANSTEY, Jack William, Arlington, VA, 22202 (US); FRIMPONG, Simon-Peter Atuahene, Arlington, VA, 22202 (US)
(74) Representative: Hoffmann Eitle

(57) **Abstract**

A monitoring system to monitor cargo on a vehicle. The monitoring system includes cameras configured to capture images of the cargo while on the vehicle with the cameras aligned to capture images of the cargo from different views. A computing device includes processing circuitry configured to process the images received from the cameras. The computing device is configured to: identify a base of the cargo; track a location of the cargo within the vehicle based on a position of the base within the images; determine that the cargo is a pallet; and determine a volume of the pallet.

## Description

### TECHNOLOGICAL FIELD

The present disclosure relates generally to the field of cargo monitoring and, more specifically, to a monitoring systems and methods to identify cargo moving within an area such as within an interior of a vehicle.

### BACKGROUND

A wide variety of vehicles are used to transport cargo. Examples include but are not limited to aircraft, ocean going vessels, and trucks. The transport process generally includes loading the cargo onto the vehicle, positioning the cargo in the vehicle, transporting the cargo from a first location to a second location, and then unloading the cargo. There is a need to identify and monitor the cargo during the transport process.

Existing systems provide various manners of identifying the cargo that is loaded onto a vehicle. However, these systems are not able to accurately monitor the cargo including failing to track the position of the cargo and/or failing to accurately identify the cargo. This can result in the cargo being improperly loaded onto the vehicle. This can also result in the location of the cargo on the vehicle being unknown during the transport.

Some existing systems require an operator to visually inspect and identify the cargo. However, the visual identification of the cargo has been found to be inaccurate as operators are often unable to accurately identify the cargo or fail to properly input the cargo identification into monitoring software. Further, this can be expensive as it requires one or more operators to identify and enter the identification into the monitoring software. This process can also be time consuming which slows the loading process and can lead to delays in the transport.

### SUMMARY

One aspect is directed to a monitoring system to monitor cargo on a vehicle. The monitoring system comprises cameras configured to capture images of the cargo while on the vehicle with the cameras aligned to capture images of the cargo from different views. A computing device comprises processing circuitry configured to process the images received from the cameras with the computing device configured to: perform coarse detection and fine detection on the images and detect the cargo within the images; identify a feature of the cargo from the fine detection; and determine a type of cargo based on the feature.

In another aspect, the coarse detection comprises identifying a foreground section of the images and removing a background section of the images, and the fine detection comprises detecting the feature based on generalized Hough transforms.

In another aspect, the computing device is further configured to identify the feature as a mesh and determine that the cargo is a pallet.

In another aspect, the computing device is configured to perform the fine detection on a limited section of the images that comprises a base of the cargo and a limited number of vertical rows of pixels upward from the base.

In another aspect, the computing device is further configured to determine a confidence value of the images based on a match between the cargo captured in the image and image templates.

In another aspect, the computing device is configured to determine that the image captures the cargo when the confidence value is above a predetermined threshold.

In another aspect, the computing device is configured to determine a direction of movement of the cargo within the vehicle based on changes in the confidence values of the images.

In another aspect, the computing device is configured to identify the feature as a lack of one or more of a mesh and a belt.

In another aspect, the computing device is configured to determine dimensions of the cargo based on the images, determine a scale of the images, and determine a volume of the cargo based on the dimensions and the scale.

In another aspect, the computing device determines the volume of the cargo just when the type of the cargo is a pallet.

In another aspect, the computing device is further configured to identify a reference point on the cargo and track a location of the cargo within the vehicle based on a position of the reference point within the images.

One aspect is directed to a monitoring system to monitor cargo on a vehicle. The monitoring system comprises cameras configured to capture images of the cargo while in the vehicle with the cameras aligned to capture images of the cargo from different views. A computing device comprises processing circuitry with the computing device configured to: receive the images from the cameras; remove a background section of the images from a foreground section of the images; perform generalized Hough transforms and detect the cargo in the foreground sections of the images; and determine a type of the cargo.

In another aspect, the computing device is further configured to identify a feature of the cargo and determine the type of the cargo based on the feature.

In another aspect, the computing device is further configured to determine a confidence score for each of the images and track a location of the cargo within the vehicle based on the confidence score of the images and a location of a reference point of the cargo in the images.

In another aspect, the computing device is configured to perform the generalized Hough transforms on a lower section of the foreground section that comprises a base of the cargo.

One aspect is directed to a method of monitoring cargo within a vehicle with the method comprising: receiving images of the cargo while the cargo is positioned within the vehicle; for each of the images, performing a coarse detection and a fine detection; identifying a feature of the cargo after performing the fine detection; and identifying the cargo based on the feature.

In another aspect, identifying the feature comprises identifying a mesh that extends over packages of the cargo.

In another aspect, identifying the feature comprises failing to locate a particular visible item in the images with the particular visible item comprising a mesh, a belt, and a particular shape of the cargo.

In another aspect, the method further comprises performing the fine detection and identifying edges of the cargo.

In another aspect, the method further comprises determining one of the images in which the cargo fills a bounding box and determining a center of the cargo based on the one image.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric diagram of an aircraft having a vision system configured to monitor cargo within an interior space.
Figure 2 is a isometric view of cargo being loaded through a door of a fuselage and into an interior space of a vehicle.
Figure 3 is a schematic diagram of a container.
Figure 4 is a schematic diagram of a pallet.
Figure 5 is a schematic diagram of a monitoring system configured to monitor cargo within an interior space of a vehicle.
Figure 6 is a flowchart diagram of a method of monitoring cargo within a vehicle.
Figure 7 is a flowchart diagram of a method of monitoring cargo within a vehicle.
Figure 8 is an image of cargo positioned along a path within an interior space of a vehicle.
Figure 9 is a diagram of an output screen illustrating a plot chart of confidence values of images.
Figure 10 is a schematic diagram of a monitoring system that is operatively connected to one or more remote nodes.
Figure 11 is a schematic diagram of a computing device.

### DETAILED DESCRIPTION

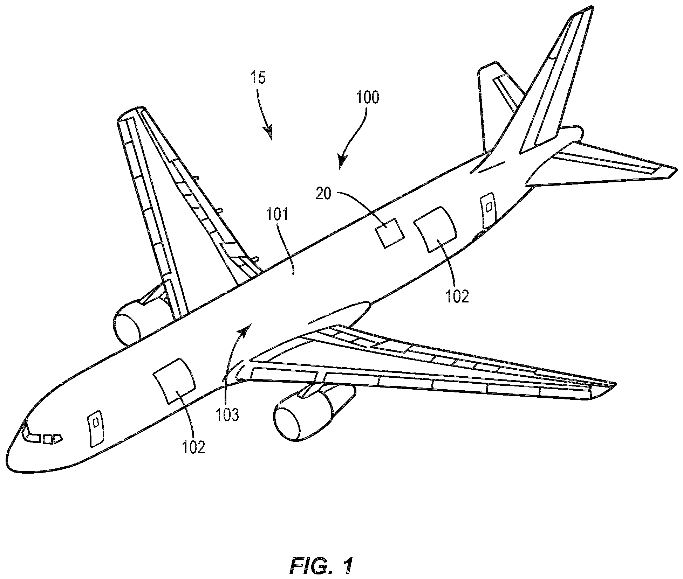

Figure 1 illustrates a vehicle 100 equipped with an autonomous monitoring system 20 for monitoring cargo. In this example, the vehicle 100 is an aircraft having a fuselage 101 that includes an interior space 103 configured to hold the cargo. One or more doors 102 provide for loading and unloading the cargo to and from the interior space 103.

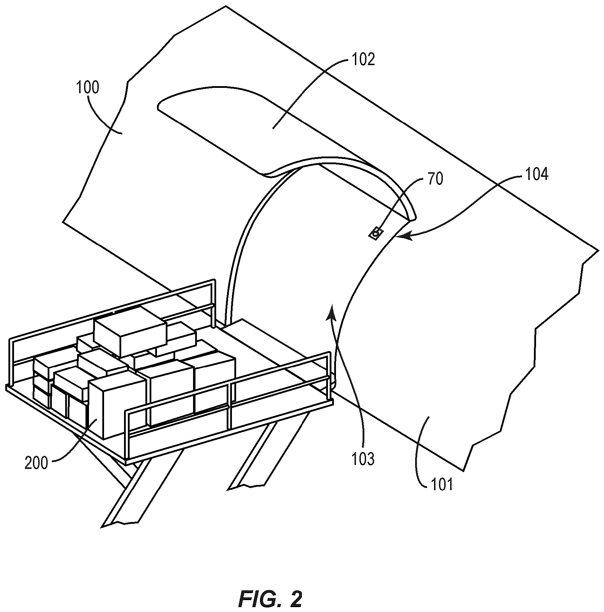

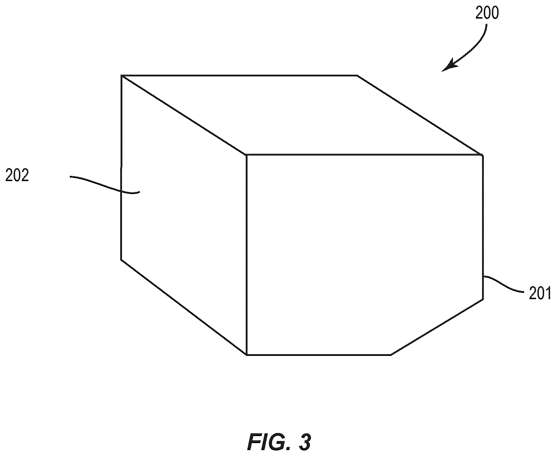

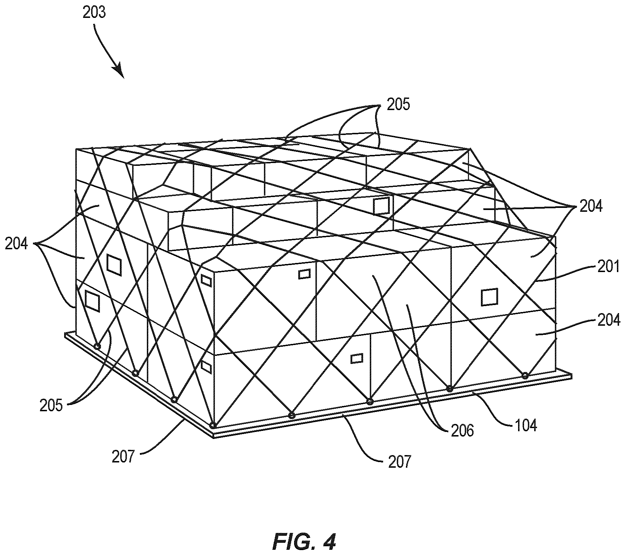

Figure 2 illustrates cargo 200 being positioned on a platform for loading into the vehicle 100. The door 102 in the vehicle fuselage 101 is in an open position. This provides for the cargo 200 to be moved through the opening 104 in the fuselage 101 and into the interior space 103. A variety of different types of cargo 200 can be transported by the vehicle 100. Cargo 200 can include containers 202 as illustrated in Figure 3. The containers 202 include outer walls that extend around and form an enclosed interior. The walls are often rigid and have a fixed shape that conform to the interior space 103 of the vehicle 100. In some examples, the containers 202 include an aluminum frame with Lexan or fiberglass walls. Cargo 200 can also include pallets 203 as illustrated in Figure 4. The pallets 203 include a base 207 which is a rugged, rigid sheet of material such as aluminum or plastic having a fixed size. The base 207 is normally rectangular, although other shapes are also periodically included that conform to the shape of the interior space 103. The base 207 is configured to support individual packages 204 that are stacked together. Mesh 205 extends over the packages 204 to secure the packages 204 to the base 207. The mesh 205 can be formed from various materials including nylon or polyester and forms a netting with diamond-shaped openings 206. Cargo 200 can also include various other configurations that each include a base.

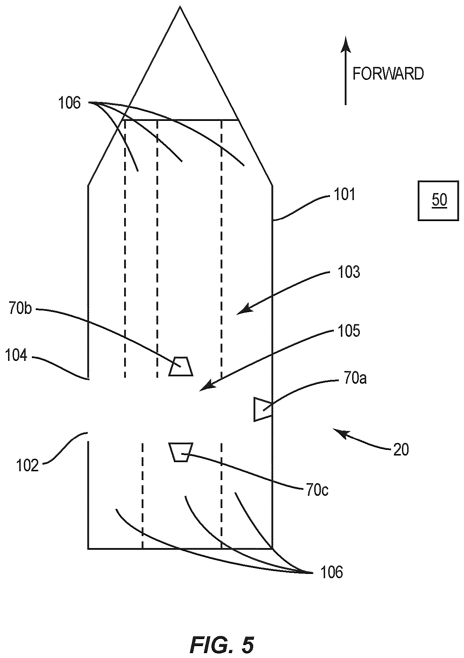

Figure 5 schematically illustrates a monitoring system 20 to monitor the cargo 200. The monitoring system 20 includes cameras 70 that are positioned within the interior space 103. The cameras 70 are positioned in the interior space 103 which provides protection against the weather and other elements in the outside environment that could cause damage. The cameras 70 capture images of the cargo that are processed by a computing device 50. Figure 5 includes the cameras 70 positioned at an alignment area 105 that is adjacent to the opening 104.

The alignment area 105 is configured for the cargo 200 to enter into the interior space 103 and be aligned with a path 106 that extends farther into the interior space 103. The paths 106 lead away from the alignment area 105 in forward and aft directions and provide for loading the cargo 200 in an efficient manner. During loading, the cargo 200 is moved through the door 102 and into the alignment area 105. The cargo 200 is aligned with one of the paths 106 and then moved along the path 106 until reaching the end of the path 106 or abutting against other cargo 200 that has been previously loaded in the path 106. In some examples, the cargo 200 is loaded according to a loading instruction report (LIR). The LIR is used by operators to load the vehicle 100 and provides instructions where to position the cargo 200 on the vehicle 100 to comply with weight and balance limits. The configuration of the alignment area 105 and paths 106 provides for loading and unloading in a last in - first out (LIFO) manner.

The cameras 70 are positioned on the vehicle 100 to capture images of the cargo 200 while in the interior space 103. The cameras 70 are configured to capture images of the cargo 200 either as individual discrete images and/or video images. Figure 5 illustrates the cameras 70 positioned at the alignment area 105. A first camera 70a is positioned at the alignment area 105 opposite from the cargo door 102. The first camera 70a faces towards the door 102 to capture the cargo 200 as it moves through the opening 104 and within the alignment area 105. A second camera 70b is positioned forward of the alignment area 105. The second camera 70b faces aft and captures the cargo 200 within the alignment area 105 and aft section of the interior space 103 (i.e., section of the interior space 103 behind the alignment area 105). A third camera 70c is positioned aft of the alignment area 105. The third camera 70c faces forward and captures cargo 200 within the alignment area 105 and in a forward section of interior space 103 (i.e., section forward of the alignment area 105). In some examples, the cameras 70 have a fixed position and fixed field of view. The cameras 70 can record images at various frequencies.

In some examples, the cargo monitoring is performed with images 71 from a single camera 70. In other examples, the cargo monitoring is performed with images 71 from two or more different cameras 70.

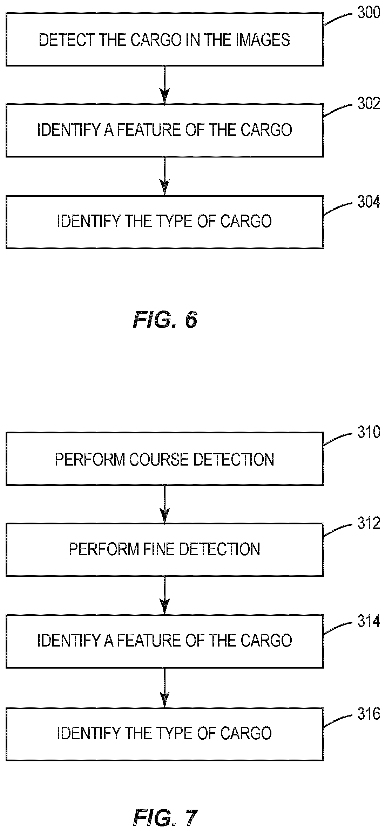

The computing device 50 receives images 71 from the one or more cameras 70 and processes the images to monitor the cargo 200 within the interior space 103. Figure 6 illustrates an example of a method of monitoring the cargo 200. The image processing detects the cargo 200 in the images 71 (block 300). The computing device 50 processes the images 71 and to identify a feature 201 of the cargo 200 (block 302). Different features 201 can be identified, including but not limited to a shape of the cargo, a base of the cargo, a mesh, and a belt. The computing device 50 then identifies the type of cargo 200 based on the feature (block 304). The types of cargo 200 can vary with examples including but not limited to containers 200, pallets 203, and individual items (e.g., machinery, vehicles).

In some examples, the processing also includes tracking a location of the cargo 200 as it moves within the interior space 103.

Figure 7 illustrates another example of a method of monitoring cargo 200. Images 71 are receives from one or more of the cameras 70. The image processing initially includes a coarse detection (block 310). The coarse detection identifies a first section of the image and removes a remainder of the image. Fine detection is performed on the first section (block 312). In some examples, the fine detection includes generalized Hough transforms to identify the cargo 200. Based on the fine detection, the image processing identifies a feature of the cargo 200 (block 314) and then identifies the cargo type (block 316).

In some examples, the processing determines a volume of the cargo 200 based on one or more of the dimensions of the cargo 200 and the scale of the images 71.

The cargo monitoring detects the cargo 200 based on one or more images 71 captured by one or more of the cameras 70. The cameras 70 have a fixed field of view such that the position of the cargo 200 within multiple sequential images changes as the cargo 200 moves along the path 106b. For cargo 200 that is moving away from the camera, the cargo 200 initially appears visually large and may not be fully visible in the first images 71. Once the cargo 200 moves within the interior space 103 a distance away from the camera, the cargo 200 is fully captured in one or more of the images 71. As the cargo 200 continues to move away, the cargo 200 appears visually smaller. Similarly, cargo 200 that is at a distance and moving towards the camera 70 initially appears small. The cargo 200 appears larger in subsequent images 71 as it moves closer to the camera 70. Eventually, part of the cargo 200 will not be visible as it moves past the field of view of the camera 70.

The image processing performs coarse detection on the images 71. The coarse detection identifies the cargo 200 in the foreground of the images. The image processing then subtracts out or otherwise removes the other sections of the images. In some examples, the background of the images are removed. The coarse detection removes the section of the images that are not necessary to identify the cargo 200.

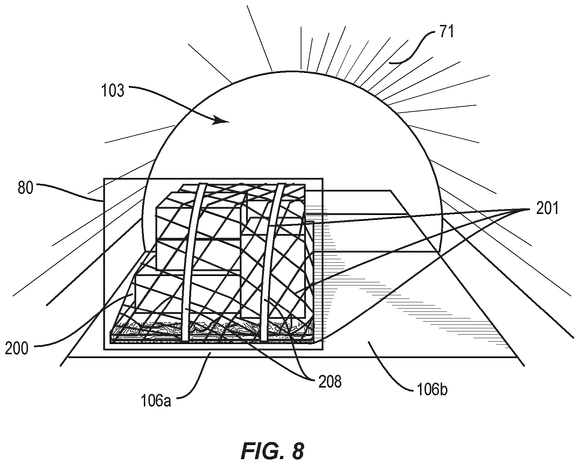

Figure 8 illustrates an image 71 that captures a first path 106a and a second path 106b within the interior space 103. The image 71 also includes cargo 200 positioned in the second path 106b. In some examples, the coarse detection includes a bounding box 80 the outlines a section within the image 71. In some examples, the bounding box 80 is statically positioned at a fixed reference point in each of the images 71. The bounding box 80 has a statically defined shape with fixed dimensions. The fixed dimensions of the bounding box 80 are a function of the size of the vehicle 100 and the field of view of the camera 70.

Figure 8 illustrates an image 71 in which the cargo 200 substantially fills the bounding box 80. This includes the base of the cargo 200 positioned at the bottom of the bounding box 80 and the top of the cargo 200 at the top of the bounding box 80. The coarse detection removes the section of the image 71 that is outside of the bounding box 80. In some examples, the coarse detection maintains just the portion of the image 71 within the bounding box 80. The remainder of the image 71 is deleted as the data is not necessary to determine features of the cargo 200.

After the coarse detection, the image processing includes fine detection of the images 71. In some examples, the fine detection uses generalized Hough transforms (GHT) to identify the cargo 200. In some examples, the GHT provides for identifying a feature of the cargo which is then be used to identify the cargo 200.

In some examples, the image processing converts the images to grayscale. This conversion facilitates identifying edges of the cargo 200 and/or features 201. The conversion to grayscale also reduces the amount of data which simplifies the image processing algorithms and reduces the computational requirements which can be done with less processing power. After the conversion, a Canny edge detection algorithm is used to produce an edge image. The edge image includes the edges of the cargo 200 and/or features 201 without the detail that is not required for the identification. A reference point is determined for the cargo 200. In some examples, the reference point is a centroid of the cargo 200. In another example, the reference point is a center point along the bottom edge of the cargo 200.

The GHT uses the edge image to generate a template (i.e., a generalized shape model). The image processing compares detected edge points in the image with the template to determine the identity and location of the cargo. This processing includes determining the probability of matches between features 201 in the image and corresponding elements in the template. In some examples, this is achieved by determining boundary points expressed in terms of vectors related to the reference point.

The cargo 200 is identified based on the identification of one or more features 201. Various features 201 of the cargo 200 can be identified. One example of a feature is an overall shape of the cargo 200. In one specific example, a container 202 is identified based on the overall shape. A feature can also include a shape of section of the cargo 200, such as a shape of the bottom. In some examples, the feature 201 is a mesh 205 that extends over packages 204 of a pallet 203 as shown in Figures 4 and 8. The mesh 205 is identified by one or more diamond-shaped sections of the mesh within the image. In some examples, a single diamond-shaped section provides for identifying the mesh 205 and classifying the cargo 200 as a pallet 203. In other examples, two or more diamond-shaped sections are identified to class the pallet 203. In another example, the feature 201 is a belt 208 that is positioned on an exterior of the cargo 200. Figure 8 illustrates belts 208 that secure packages 204 to the base 207 of a pallet 203. In another example, the feature 201 is a lack of identifying other known features. For example, when the image 71 does not include a mesh 205, a belt 208, and has an unexpected shape, the image processing determines that the type of cargo is miscellaneous which covers random cargo.

In some examples, the fine detection uses the entire cropped image generated from the coarse detection. In other examples, the fine detection uses a limited section of the cropped image. In one specific example, the fine detection crops the image 71 to include just a bottom section. The processing identifies the bottom of the cargo 200 and additional rows of pixels upward from the bottom. The image processing uses the bottom 73 as a reference because it is known to be on the floor of the interior space 103.

In some examples, image processing determines one or more dimensions of the cargo 200 from the image 71. The width is determined using a point on the image 71 that is upward from the bottom 73. For example, the width is determined at a predetermined number of pixel rows upward from the bottom 73. This spacing upward from the bottom ensures that the width is taken at a point other than the bottom side of the cargo which includes a bottom side of a container or a base of the pallet. The bottom 73 of the image is not used to determine the width because the cargo bottom has a fixed width for both containers 202 and pallets 203. However, the width upward from the bottom has a variable width for pallets 203 based on the number and stacking of the packages 204.

In some examples, the width determination uses an image at the bounding box 80. Because the dimensions are known, the size corresponding to each pixel is known (i.e., x number of pixels in the image = y inches of the cargo). This enables determining the dimensions of the cargo 200. One or more other dimensions (e.g., height) of the cargo 200 can be determined in a similar manner.

The image processing analyzes multiple images 71 that are captured by a camera 70. The fine detection includes determining a confidence score using GHT processing. A confidence score is determined for each image 71 based on the extent of matching between the cargo 200 and identified template. A higher score indicates a higher confidence that the image 71 includes cargo 200, while a lower score has a lower confidence that the cargo 200 is captured in the image 71.

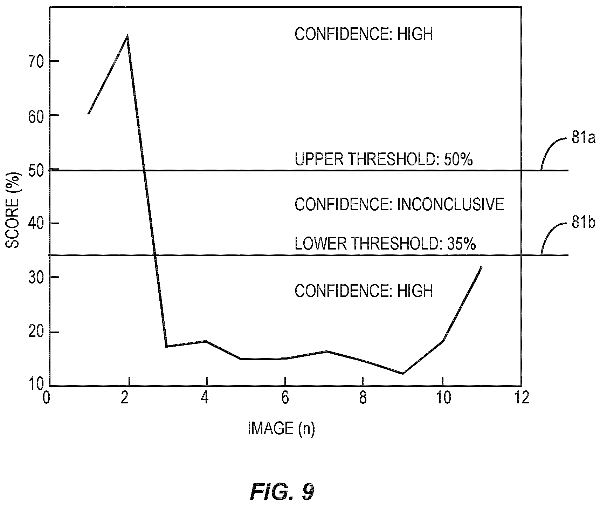

Figure 9 illustrates an example of a score plot with confidence scores for images 71 that are captured and analyzed. In this example, the images 71 capture cargo 200 as it is moving towards the camera 70. The first image includes the cargo 200 farthest from the camera 70 and the last image includes the cargo 200 nearest to the camera 70. In this example, the first and second images have the highest confidence scores because the cargo 200 is fully visible within the respective images. The first image includes the cargo 200 farther away from the camera 70 and has a lower score relative to the second image when the cargo 200 is closer.

As further shown in Figure 9, images 3-10 include lower confidence scores than images 1 and 2. This occurs because as the cargo 200 moves towards the camera 70, the cargo 200 starts to move out of the images 71. This results in lower confidence scores because not all of the cargo 200 is visible in the images 71. The image processing is able to match the image with a template, but the match is not complete and thus results in a lower score. At some point as illustrated in image 11, the cargo 200 moves completely out of the field of view of the camera and does not appear in the image 71. The image processing does match the image to a template resulting in a relatively higher score than those of partially-cropped cargo (e.g., images 3-10). This score is considered noise.

In some examples, the detection process includes one or more of the images 71 having a confidence value above a threshold 81. The threshold is set to ensure that the confidence score is high enough for the image to be used to track the cargo 200. In some examples as illustrated in Figure 9, multiple thresholds such as an upper threshold 81a and a lower threshold 81b are used to analyze the confidence scores. Images 71 with confidence scores above the upper threshold 81a are determined to include cargo 200. Images 71 with confidence scores below the lower threshold 81b are determined to not include cargo 200. Images 71 with confidence scores between the upper threshold 81a and lower threshold 81b require additional processing to determine whether the cargo 200 is included in the image 71. The number and positioning of the thresholds 81 can vary.

In some examples, just the image 71 with the highest confidence score is used to compare to the threshold 81. The other images 71 are not used as part of the confidence determination. In other examples, two or more of the images 71 are used to determine the confidence value.

The image processing is configured to determine the volume of the cargo 200. In some examples, the volume of each piece of cargo 200 is determined. In other examples, the volume is determined just for certain types of cargo. In one specific example, the volume of the pallets 203 are determined because each pallet 203 has a unique shape and/or size due to the different packages 204 and therefore the volume is needed, such as for a shipping information.

The volume calculation uses dimensions of the cargo 200 such as height, width, and surface area. In some examples, the surface area is determined by use of a contour mapping algorithm. The volume determination also uses the image scale. The scale is determined based on the known field of view of the camera 70 that captures the image 71. In one example, the image 71 for scaling is captured at a point in the field of view of the camera 70 having a known reference. For example, a point where each number of pixels equates to a known length of the cargo 200 (e.g., x pixels in the image = x feet of the cargo; 477 pixels = 10 ft.; 1023 pixels = 12 ft.). In some examples, multiple cameras 70 are used to capture images and scaling is done for each of the different cameras. For example, a first camera 70a captures a side view of the cargo 200 at a location having a first scale. A second camera 70b captures a rear view of the cargo 200 at a point having a second scale. The scaling from the two separate cameras 70a, 70b are used to determine two dimensions of the cargo 200. The volume of the pallet 203 is determined based on the surface area, the width, and the scale (block 408).

The monitoring system 20 tracks the location of the cargo 200 as it moves within the interior space 103. Tracking the location of the cargo 200 can occur through a single camera tracking mode and/or multiple camera tracking mode. In single camera tracking mode, one of the cameras 70 facing forward or aft are used to track the location. In one specific example using Figure 5, camera 70b is used to track the location of cargo 200 moving aft of the alignment area 105 and camera 70c is used to track the location of the cargo 200 moving forward of the alignment area 105. The images captured by the camera 70 are processed to obtain a confidence score. Multiple images are processed with the change in the confidence score used to determine if the cargo 200 is moving towards or away from the camera 70. Further, the location of the reference point in the different images 71 is compared to determine the direction of movement. In one specific example, the location of the reference point is measured along a y axis that is aligned with and extends directly away from the camera 70.

For multicamera tracking, two or more of the cameras 70 track the location of the cargo 200 within the interior space 103. In one example as illustrated in Figure 5, camera 70a is used to track the location of the cargo 200 in the alignment area 105, camera 70b tracks the movement within an aft section of the interior space 103, and camera 70c tracks the movement within a forward section. In some examples, images captured by each of the cameras 70 are processed with the reference point monitored in each image to detect the change in position, and with the confidence score computed for each image and compared to determine movement direction. In some examples, once it is determined that the cargo 200 has left the field of view of a particular camera 70, image processing is no longer performed on the images, or is performed on a lower frequency.

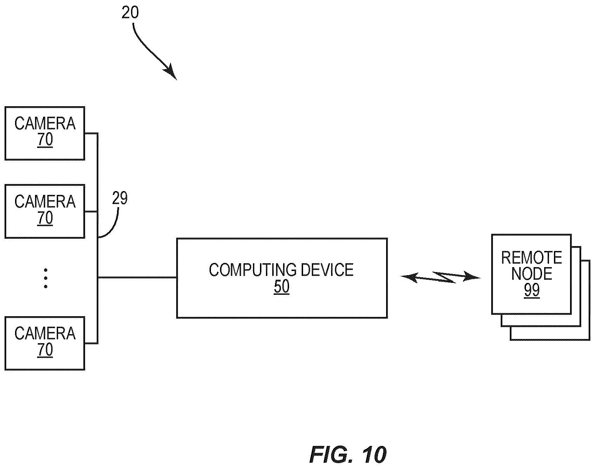

Figure 10 illustrates a schematic diagram of a monitoring system 20 that includes a computing device 50 and cameras 70. In one example, the cameras 70 communicate with the computing device 50 through a data bus 29. In some examples, the system utilizes power over Ethernet to enable delivery of the camera data from the cameras 70 to the computing device 50. The cameras 70 can send the images to the computing device 50 through various other wireless and wired structures.

In one example, the monitoring system 20 is integrated with the vehicle 100. The computing device 50 can be a stand-alone device that provides just for monitoring the cargo 200. In another example, the computing device 50 performs one or more additional functions. For example, the computing device 50 can be part of the flight control computer that oversees the operation of the vehicle 100. In another example, the computing device 50 is part of an overall vision system that comprises cameras 70 located throughout the vehicle 100 and is used for monitoring passengers and/or cargo. In yet another example, the computing device 50 is located remotely from the vehicle 100. One example includes the computing device 50 being a remote server that receives the images from the cameras 70 and processes the image data.

The computing device 50 receives the images from the cameras 70. The computing device 50 is configured to use a combination of machine learned perception, photogrammetry, and automated software modules to automatically process and deliver data in real time.

In some examples, the images 71 include a time stamp indicating the time at which the image was captured. The time stamp can be applied by the camera 70 or the computing device 50. The time stamp can be used by the computing device 50 to further track the movement of the cargo 200 in the different images 71 that are captured by the cameras 70.

The data determined by the computing device 50 is delivered to one or more remote nodes 99. The monitoring system 20 is configured to detect connectivity and bandwidth of the communication capacity with the nodes 99. The vehicle 100 is configured to communicate with a remote node 99 through one or more different communication channels, such as through a wireless communication network or a wired connection.

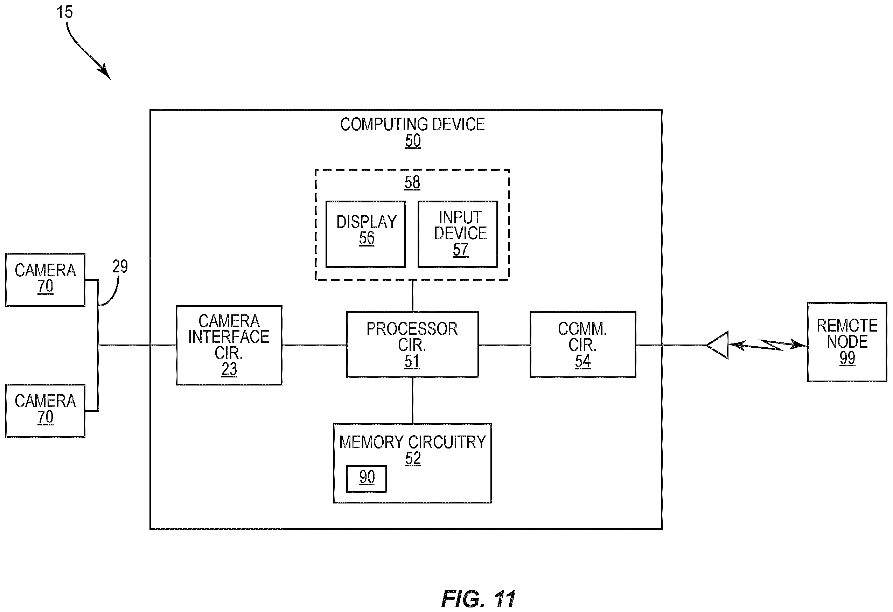

As illustrated in Figure 11, the computing device 50 includes processing circuitry 51, memory circuitry 52, camera interface circuitry 53, and communication circuitry 54. The processing circuitry 51 controls overall operation of the monitoring system 20 according to program instructions stored in the memory circuitry 52. The processing circuitry 51 can include one or more circuits, microcontrollers, microprocessors, hardware, or a combination thereof. The processing circuitry 51 can include various amounts of computing power to provide for the needed functionality.

Memory circuitry 52 includes a non-transitory computer readable storage medium storing program instructions, such as a computer program product, that configures the processing circuitry 51 to implement one or more of the techniques discussed herein. Memory circuitry 52 can include various memory devices such as, for example, read-only memory, and flash memory. Memory circuitry 52 can be a separate component as illustrated in Figure 11 or can be incorporated with the processing circuitry 51. Alternatively, the processing circuitry 51 can omit the memory circuitry 52, e.g., according to at least some examples in which the processing circuitry 51 is dedicated and non-programmable. Memory circuitry 52 is configured to support loading of the images into a runtime memory for real time processing and storage. In one example, the memory circuitry 52 includes a solid state device (SSD).

In some examples, the memory circuitry 52 is configured to store a record 90 of the cargo 200. The record 90 includes the calculated volume (if the cargo 200 is a pallet 203) and the location of the cargo 200 on the vehicle 100. The record 90 can include additional information about the cargo 200, such as but not limited to the weight, contents, particular shipping instructions, origination point, and destination point.

Camera interface circuitry 53 provides for receiving the images 71 from the cameras 70. The camera interface circuitry 53 can provide for one-way communications from the cameras 70 or two-way communications that are both to and from the cameras 70.

Communication circuitry 54 provides for communications to and from the computing device 50. The communications can include communications with other circuitry on the vehicle 100 (e.g., vehicle control system) and/or communications with a remote node 99. Communication circuitry 54 provides for sending and receiving data with remote nodes 99. The computing device 50 automatically detects connectivity and bandwidth that are available.

A user interface 58 provides for a user to access data about the cargo 200. The user interface 58 includes one or more input devices 57 such as but not limited to a keypad, touchpad, roller ball, and joystick. The user interface 58 also includes one or more displays 56 for displaying information to regarding the cargo 200 and/or for an operator to enter commands to the processing circuitry 51.

In some examples, the computing device 50 is output on a graphical user interface (GUI) displayed on display 56 or to a remote node 99. The GUI can include one or more graphical components (e.g., icons, menus, and the like) configured to provide a user with the capability to interact with the GUI to convey needed information to the user.

In some examples, the computing device 50 operates autonomously to process the images 71. This autonomous ability minimizes and/or eliminates operator intervention which could slow the process and/or create errors.

In one example, the monitoring system 20 is integrated into a vehicle 100. The monitoring system 20 can used on a variety of vehicles 100. Vehicles 100 include but are not trucks, trains, ships, and aircraft.

The vision system 15 can also be used in other contexts. Examples include but are not limited to warehouses, airport loading facilities, and distribution centers.

The examples disclosed above use the cargo detection as a step in monitoring the location of the cargo 200 within the vehicle 100. In another application, the cargo detection can be used to determine whether an object is present at a predetermined position. The cargo detection is used to determine if the cargo is at the position, and calculate a corresponding confidence value. In this application, the other steps of the monitoring process may or may not be used.

In some examples, the image processing uses coarse detection to initially identify the cargo 200. Coarse detection can also be used in other applications, such as determining whether an item is at a particular position. The coarse detection is used to determine whether an item is at a particular position. In some applications, the coarse detection does not specifically identify the item. These other applications can be used for cargo 200, or for various other objects that can be detected.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A monitoring system to monitor cargo on a vehicle, the monitoring system comprising:
cameras (70) configured to capture images (71) of the cargo while on the vehicle, the cameras (70) aligned to capture images (71) of the cargo from different views;
a computing device (50) comprising processing circuitry (51) configured to process the images (71) received from the cameras 70, the computing device (50) configured to:
perform coarse detection and fine detection on the images (71) and detect the cargo within the images (71);
identify a feature 201 of the cargo from the fine detection; and
determine a type of cargo based on the feature.

2. The monitoring system of claim 1, wherein:
the coarse detection comprises identifying a foreground section of the images (71) and removing a background section of the images (71); and
the fine detection comprises detecting the feature based on generalized Hough transforms.

3. The monitoring system of claim 1 or 2, wherein the computing device (50) is further configured to identify the feature as a mesh (205) and determine that the cargo is a pallet (203).

4. The monitoring system of any one of claims 1-3, wherein the computing device (50) is configured to perform the fine detection on a limited section of the images (71) that comprises a base of the cargo and a limited number of vertical rows of pixels upward from the base.

5. The monitoring system of any one of claims 1-4, wherein the computing device (50) is further configured to determine a confidence value of the images (71) based on a match between the cargo captured in the image (71) and image templates, optionally, wherein the computing device (50) is configured to determine that the image (71) captures the cargo when the confidence value is above a predetermined threshold, further optionally, wherein the computing device (50) is configured to determine a direction of movement of the cargo within the vehicle based on changes in the confidence values of the images (71).

6. The monitoring system of any one of claims 1-5, wherein the computing device is configured to identify the feature as a lack of one or more of a mesh and a belt.

7. The monitoring system of any one of claims 1-6, wherein the computing device (50) is configured to:
determine dimensions of the cargo (200) based on the images (71);
determine a scale of the images (71); and
determine a volume of the cargo (200) based on the dimensions and the scale, optionally, wherein the computing device (50) determines a volume of the cargo just when the type of the cargo is a pallet (203).

8. The monitoring system of any one of claims 1-7, wherein the computing device (50) is further configured to:
identify a reference point on the cargo (200); and
track a location of the cargo within the vehicle based on a position of the reference point within the images (71).

9. A monitoring system to monitor cargo on a vehicle, the monitoring system comprising:
cameras (70) configured to capture images (71) of the cargo while in the vehicle, the cameras (70) are aligned to capture images (71) of the cargo from different views;
a computing device (50) comprising processing circuitry with the computing device configured to:
receive the images (71) from the cameras (70);
remove a background section of the images from a foreground section of the images;
perform generalized Hough transforms and detect the cargo in the foreground sections of the images; and
determine a type of the cargo.

10. The monitoring system of claim 9, wherein the computing device (50) is further configured to:
identify a feature of the cargo; and
determine the type of the cargo based on the feature.

11. The monitoring system of claim 9 or 10, wherein the computing device (50) is further configured to:
determine a confidence score for each of the images (71); and
track a location of the cargo within the vehicle based on the confidence score of the images (71) and a location of a reference point of the cargo in the images (71).

12. The monitoring system of any one of claims 9-11, wherein the computing device (50) is configured to perform the generalized Hough transforms on a lower section of the foreground section that comprises a base of the cargo.

13. A method of monitoring cargo within a vehicle, the method comprising:
receiving images (71) of the cargo while the cargo is positioned within the vehicle;
for each of the images (71), performing a coarse detection and a fine detection;
identifying a feature of the cargo after performing the fine detection; and
identifying the cargo based on the feature.

14. The method of claim 13, wherein identifying the feature comprises identifying a mesh that extends over packages of the cargo, and/or wherein identifying the feature comprises failing to locate a particular visible item in the images with the particular visible item comprising a mesh, a belt, and a particular shape of the cargo.

15. The method of claim 13 or 14, further comprising performing the fine detection and identifying edges of the cargo, and/or further comprising:
determining one of the images (71) in which the cargo fills a bounding box (80); and
determining a center of the cargo based on the one image (71).
